# DEMANDE DE BREVET EUROPEEN

(11) **EP 2 266 859 A1**
(43) Date de publication de la demande: **29.12.2010**
(21) Numéro de dépôt: 10166880.4
(22) Date de dépôt: 22.06.2010
(51) Int. Cl.: B61D 23/02, B60R 3/02

(54) **Comble-lacune rétractable**

(30) Priorité: 22.06.2009 FR 0903019
(71) Demandeur: Faiveley Transport, 93200 Saint Denis (FR)
(72) Inventeur: Lyer, Philippe, 37320, Esvres (FR); Mercier, Eric, 37000, Tours (FR)
(74) Mandataire: Novagraaf Technologies

(57) **Abrégé**

L'invention concerne un système de comble-lacune (10) rétractable comportant : un châssis (18) définissant une direction verticale, au moins une marche mobile (24) mobile par rapport au châssis (18) entre une position rétractée et une position déployée, des moyens moteurs (22) pour déployer la marche mobile (24) de la position rétractée à la position déployée, un mécanisme de guidage de la marche mobile (24) par rapport au châssis (18), imposant à la marche mobile (24) une trajectoire parallèle à un plan vertical de guidage, et un mécanisme de transmission reliant le moteur à la marche mobile et de support de la marche mobile, comprenant une coulisse (52) solidaire de la marche mobile, guidant un coulisseau (50) en translation parallèlement à un axe longitudinal perpendiculaire au plan vertical de guidage, une première bielle liée au châssis (18) de manière à être mobile par rapport au châssis (18), lorsque la marche mobile (24) se déploie de la position rétractée à la position déployée, autour d'un premier axe géométrique de rotation (42), et liée au coulisseau (50) de manière à être mobile par rapport à la coulisseau (50), lorsque la marche mobile (24) se déploie de la position rétractée à la position déployée, autour d'un deuxième axe géométrique de rotation (46), une deuxième bielle (58) liée au châssis (18) de manière à être mobile par rapport au châssis (18), lorsque la marche mobile (24) se déploie de la position rétractée à la position déployée, autour d'un troisième axe géométrique de rotation (60), et liée au coulisseau (50) de manière à être mobile par rapport au coulisseau (50), lorsque la marche mobile (24) se déploie de la position rétractée à la position déployée, autour d'un quatrième axe géométrique de rotation (66), les premier, deuxième, troisième et quatrième axes géométriques de rotation étant parallèles entre eux et parallèle à la direction verticale ou inclinés à moins de 15° par rapport à la direction verticale, et formant un parallélogramme déformable.

## Description

### DOMAINE TECHNIQUE DE L'INVENTION

L'invention se rapporte à un comble lacune rétractable, destiné à être déployé entre une issue latérale d'un véhicule ferroviaire et un quai.

### ETAT DE LA TECHNIQUE ANTERIEURE

Pour accueillir dans les meilleures conditions les personnes à mobilité réduite, il est souhaitable que les entrées et sorties de véhicules ne soient entravées ni par des lacunes qui peuvent exister entre la caisse du véhicule et le quai, ni par des marches. Des systèmes comble-lacune sont donc proposés dans les véhicules ferroviaires neufs, incluant des rampes ou marche mobiles escamotables.

Pour la rénovation des véhicules ferroviaires, les contraintes d'encombrement au niveau des seuils de portes rendent l'installation de tels dispositifs difficiles.

Un système de déploiement de marche à moteur vertical a été proposé dans le document ES2145710.

Dans le document FR2314084 est décrit un marchepied escamotable compact pour l'accès extérieur d'une porte de voiture de chemins de fer, comportant une marche mobile associée à un mécanisme solidaire de la voiture. Ce mécanisme comporte deux coulisseaux parallèles mobiles en rotation suivant un axe horizontal proche du niveau du plancher de la voiture et orienté sensiblement dans le sens de l'axe de celle-ci. Les deux coulisseaux sont associés à deux glissières perpendiculaires à l'axe de rotation précité et portés par la marche mobile ; des moyens de manoeuvre sont prévus, associés à des moyens de guidage et à des butées de fin de course, pour déplacer les glissières de la marche mobile par rapport aux coulisseaux, et pour assurer le mouvement de la marche entre une position d'effacement sensiblement à la verticale et une position de service sensiblement à l'horizontale dans le prolongement du plancher, et pour immobiliser sélectivement la marche dans l'une ou l'autre de ces deux positions.

L'axe d'articulation des coulisseaux associé aux moyens de guidage définit la trajectoire de la marche mobile et ses deux positions extrêmes, assurées par les butées de fin de course. En escamotant la marche mobile à la verticale, on facilite son logement dans le volume de l'escalier, sans encombrer celui-ci de manière incommode.

Mais cette cinématique ne permet pas d'adapter le déploiement de la marche aux dimensions de la lacune à combler.

Par ailleurs, est décrit dans le document FR2165030 un dispositif de déploiement d'une marche comportant deux manivelles formant avec la marche un parallélogramme articulé à axes d'articulation verticaux. Le mouvement de la marche est un mouvement de translation circulaire, c'est-à-dire un mouvement par lequel le centre d'un repère géométrique triaxial mobile lié à la marche et initialement confondu avec un repère géométrique triaxial de référence lié au véhicule, décrit un arc de cercle dans le repère de référence, les axes du repère mobile restant parallèles à ceux du repère de référence. Un tel mouvement est préconisé dans ce document pour permettre un escamotage de la marche si celle-ci, restée déployée alors que le véhicule roule, venait à rencontrer un obstacle. Ce dispositif ne permet toutefois pas de garantir le positionnement de la marche en face de la porte, dans le cas où le déploiement de la marche ne serait que partiel.

### EXPOSE DE L'INVENTION

L'invention vise à remédier aux inconvénients de l'état de la technique et notamment à proposer un système de comble-lacune qui offre une grande compacité et soit adaptable à différentes dimensions de lacunes de manière à offrir un dispositif standard pour différents véhicules et/ou différentes lignes.

Pour ce faire est proposé, selon un premier aspect de l'invention, un système de comble-lacune rétractable comportant :
- un bâti définissant une direction verticale,
- au moins une marche mobile par rapport au bâti entre une position rétractée et une position déployée,
- des moyens moteurs liés à la marche mobile par une chaîne cinématique de transmission pour déployer la marche mobile de la position rétractée à la position déployée, et
- des moyens de guidage de la marche mobile par rapport au bâti, imposant à la marche mobile une trajectoire parallèle à un plan vertical de guidage,
- un chaîne cinématique de transmission reliant la marche mobile au moteur pour déployer la marche mobile de la position rétractée à la position déployée, comprenant au moins une bielle liée au bâti de manière à être mobile par rapport au bâti, lorsque la marche mobile se déploie de la position rétractée à la position déployée, autour d'un premier axe géométrique instantané de rotation non perpendiculaire à l'axe vertical, et liée à la marche mobile de manière à être mobile par rapport à la marche mobile, lorsque la marche mobile se déploie de la position rétractée à la position déployée, autour d'un deuxième axe géométrique instantané de rotation.

Le système dissocie les moyens de guidage de la chaine cinématique de transmission du mouvement. Les moyens de guidage imposent à la marche mobile une trajectoire donnée et en pratique interdisent notamment les mouvement de la marche mobile dans une direction qui serait parallèle à la direction longitudinale de la caisse du véhicule ferroviaire, ceci pour assurer que le positionnement longitudinal de la marche mobile sera identique quel que soit le degré de déploiement de celle-ci. Le plan vertical de guidage est donc un plan qui sera orienté suivant la direction transversale du véhicule.

La première bielle constitue un élément de transmission qui, en position rétractée de la marche mobile, est replié sur lui-même de manière particulièrement compacte. Pour tirer avantage de cette compacité, le premier axe géométrique de rotation peut être avantageusement vertical ou faiblement incliné, notamment de moins de 30° et préférentiellement de moins de 15° par rapport à l'axe vertical.

Selon un mode de réalisation préféré, le deuxième axe géométrique de rotation est parallèle au premier axe de géométrique de rotation. Les premier et deuxième axes géométriques de rotation sont alors préférentiellement parallèles au plan de guidage.

Dans cette hypothèse, la première bielle peut constituer à la fois un moyen de transmission du mouvement et un bras articulé de support des charges appliquées à la marche mobile.

Alternativement, les forces appliquées à la marche mobile lorsqu'elle est empruntée par des usagers peuvent être transmis et supportés directement par les moyens de guidage.

Selon un mode de réalisation, les moyens de guidage de la marche mobile par rapport au bâti imposent à la marche mobile un mouvement de translation par rapport au bâti, qui suit préférentiellement une direction horizontale, perpendiculaire à l'axe vertical.

Pour ce faire, les moyens de guidage de la marche mobile par rapport au bâti peuvent comporter au moins une, voire deux glissières rectilignes.

Selon un mode de réalisation, le premier axe géométrique instantané de rotation est fixe par rapport au bâti, ce qui permet d'envisager une motorisation par un moteur électrique fixe par rapport au bâti.

La première bielle est alors liée à la marche mobile de manière à que le deuxième axe géométrique de rotation se déplace par rapport à la marche mobile, lorsque la marche mobile se déploie de la position rétractée à la position déployée, suivant une trajectoire dans un plan perpendiculaire à l'axe géométrique vertical. La marche mobile peut comporter avantageusement à cet effet une coulisse de guidage du deuxième axe géométrique de rotation suivant une trajectoire rectiligne perpendiculaire au plan vertical de guidage.

Préférentiellement la chaîne cinématique de transmission relie les moyens moteurs à la marche mobile pour rétracter la marche mobile de la position déployée à la position rétractée. Alternativement, le retour en position rétractée peut être assuré par des moyens indépendants du moteur, par exemple par un ressort de rappel.

Selon un mode de réalisation, les moyens moteurs comprennent un moteur électrique pourvu d'un arbre moteur, la chaine cinématique de transmission comportant un étage de réduction reliant l'arbre moteur à un arbre mené coaxial avec le premier axe géométrique de rotation et solidaire en rotation de la première bielle.

Selon un mode de réalisation le système comporte en outre une deuxième bielle liée au bâti de manière à être mobile par rapport au bâti, lorsque la marche mobile se déploie de la position rétractée à la position déployée, autour d'un troisième axe géométrique instantané de rotation non perpendiculaire à l'axe vertical, et liée à la marche mobile de manière à être mobile par rapport à la marche mobile, lorsque la marche mobile se déploie de la position rétractée à la position déployée, autour d'un quatrième axe géométrique instantané de rotation, les premier, deuxième, troisième et quatrième axes géométriques instantanés de rotation étant parallèles entre eux et formant un parallélogramme déformable.

Avantageusement, la première et la deuxième bielles supportent les charges verticales exercées sur la marche mobile.

Le système peut avantageusement être équipé de moyens de détection de présence sur la marche mobile, comportant au moins un capteur changeant d'état lorsque la marche mobile supporte une charge supérieure à un seuil prédéterminé.

Selon un mode de réalisation, ces moyens de détection incluent un transducteur constituant une interface entre la marche mobile et la bielle. Alternativement, le transducteur peut être disposé sur un autre élément de la chaine cinématique de transmission, si celle-ci supporte les charges, ou sur les moyens de guidage, si ce sont eux qui ont cette fonction. Naturellement, dans le cas d'une variante à deux bielles, on prévoira préférentiellement deux transducteurs en parallèle.

Selon un mode de réalisation, le bâti comporte un plancher fixe, qui peut constituer un seuil de porte extérieur au véhicule, ou partiellement intérieur.

Pour éviter la pollution du système, notamment par des gravillons, le bâti peut être équipé d'une brosse pourvue de poils qui en position déployée de la marche mobile, sont en appui contre celle-ci, et qui raclent la surface de la marche mobile durant le mouvement de rétractation.

Il est à noter que ce type de brosse constitue en soi un autre aspect de l'invention, qui peut être également mis en oeuvre quelle que soit la chaine cinématique de transmission choisie.

Selon un autre aspect de l'invention, celle-ci a trait à un système de comble-lacune rétractable comportant :
- un châssis définissant une direction verticale,
- au moins une marche mobile mobile par rapport au châssis entre une position rétractée et une position déployée,
- des moyens moteurs,
- un mécanisme de guidage de la marche mobile par rapport au châssis, imposant à la marche mobile une trajectoire parallèle à un plan vertical de guidage, et
- un mécanisme de transmission reliant le moteur à la marche mobile et de support de la marche mobile, comprenant :
- une coulisse solidaire de la marche mobile, guidant un coulisseau en translation parallèlement à un axe longitudinal perpendiculaire au plan vertical de guidage,
- une première bielle liée au châssis de manière à être mobile par rapport au châssis , lorsque la marche mobile se déploie de la position rétractée à la position déployée, autour d'un premier axe géométrique de rotation , et liée au coulisseau de manière à être mobile par rapport à la coulisseau, lorsque la marche mobile se déploie de la position rétractée à la position déployée, autour d'un deuxième axe géométrique de rotation, et
- une deuxième bielle liée au châssis de manière à être mobile par rapport au châssis, lorsque la marche mobile se déploie de la position rétractée à la position déployée, autour d'un troisième axe géométrique de rotation, et liée au coulisseau de manière à être mobile par rapport au coulisseau, lorsque la marche mobile se déploie de la position rétractée à la position déployée, autour d'un quatrième axe géométrique de rotation, les premier, deuxième, troisième et quatrième axes géométriques de rotation étant parallèles entre eux et parallèle à la direction verticale ou inclinés à moins de 15° par rapport à la direction verticale, et formant un parallélogramme déformable.

Le système dissocie les moyens de guidage d'une part et le mécanisme de transmission de la puissance moteur et de support de la marche mobile d'autre part. Le mécanisme de guidage impose à la marche mobile une trajectoire parallèle au plan vertical de guidage, et en pratique imposent à la marche mobile une trajectoire rectiligne dans une direction perpendiculaire aux axes géométriques de rotation.

Le mécanisme à parallélogramme articulé est particulièrement compact en position rétractée de sorte qu'il s'avère très adapté à des applications où les contraintes d'encombrement sont importantes.

Le système peut avantageusement être équipé de moyens de détection de présence sur la marche mobile, comportant au moins un capteur changeant d'état lorsque la marche mobile supporte une charge supérieure à un seuil prédéterminé.

Selon un mode de réalisation, le coulisseau est lié aux bielles par une interface élastique telle que la marche mobile admet une course élastique limitée par rapport aux bielles parallèlement aux axes géométriques de rotation. Cette interface élastique peut avantageusement constituer un étage d'un détecteur de charge associé au système.

### BREVE DESCRIPTION DES FIGURES

D'autres caractéristiques, détails et avantages de l'invention ressortiront à la lecture de la description qui suit, en référence aux figures annexées, qui illustrent :
- la figure 1, une vue en perspective d'un comble-lacune selon un mode de réalisation de l'invention, en position rétractée, monté dans une ouverture de porte de véhicule ;
- la figure 2, une vue en élévation du comble-lacune de la figure 1, en position rétractée, le plan de la vue étant sensiblement parallèle au plan longitudinal vertical du véhicule équipé du comble-lacune, une contre-marche du comble-lacune ayant été enlevée pour permettre de visualiser l'intérieur du système ;
- la figure 3, une coupe selon le plan de coupe A-A de la figure 2, ce plan s'étendant transversalement par rapport au véhicule, l'intérieur du véhicule étant situé à gauche et l'extérieur à droite sur la figure ;
- la figure 4 une coupe selon le plan de coupe B-B de la figure 2, du dessus ;
- la figure 5, une vue du comble-lacune suivant la même coupe A-A que la figure 3, mais en position déployée ;
- la figure 6, une coupe selon le plan de coupe B-B, en position déployée ;
- la figure 7 un détail selon le plan de coupe C-C de la figure 6 ;
- la figure 8, une vue en perspective d'un détail d'une interface entre une première bielle et une marche mobile du comble-lacune ;
- la figure 9, une vue en perspective d'un détail d'une interface entre une deuxième bielle et la marche mobile du comble-lacune.

Pour plus de clarté, les éléments identiques ou similaires sont repérés par des signes de référence identiques sur l'ensemble des figures.

### DESCRIPTION DETAILLEE D'UN MODE DE REALISATION

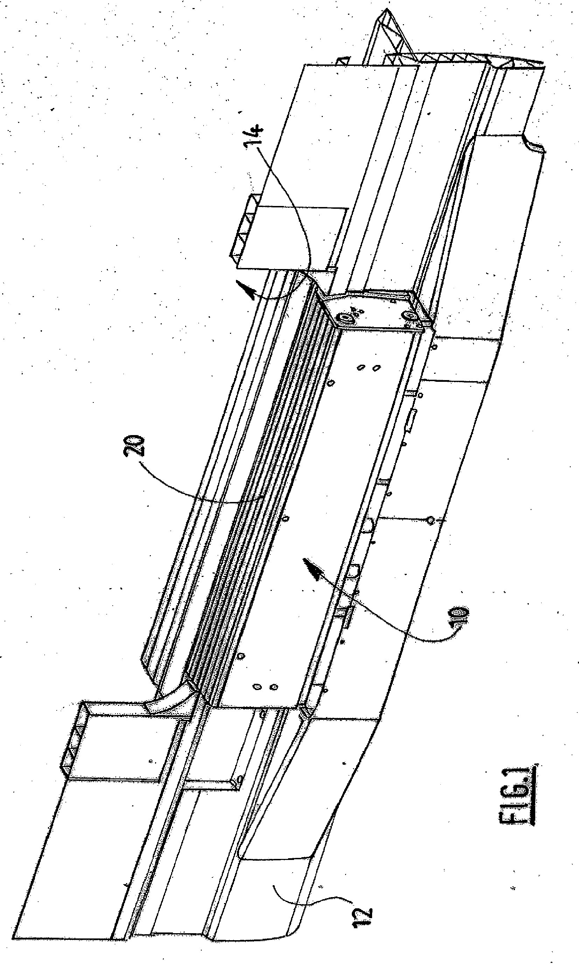

Le comble-lacune 10 représenté sur les figures constitue un sous-ensemble qui peut être monté sur la caisse 12 d'un véhicule existant. Sur la figure 1, le comble-lacune 10 est représenté dans son environnement, formant un seuil et un marchepied pour une issue 14 d'un véhicule de transport ferroviaire (ou de tout véhicule de transport en commun guidé auquel on accède par un quai).

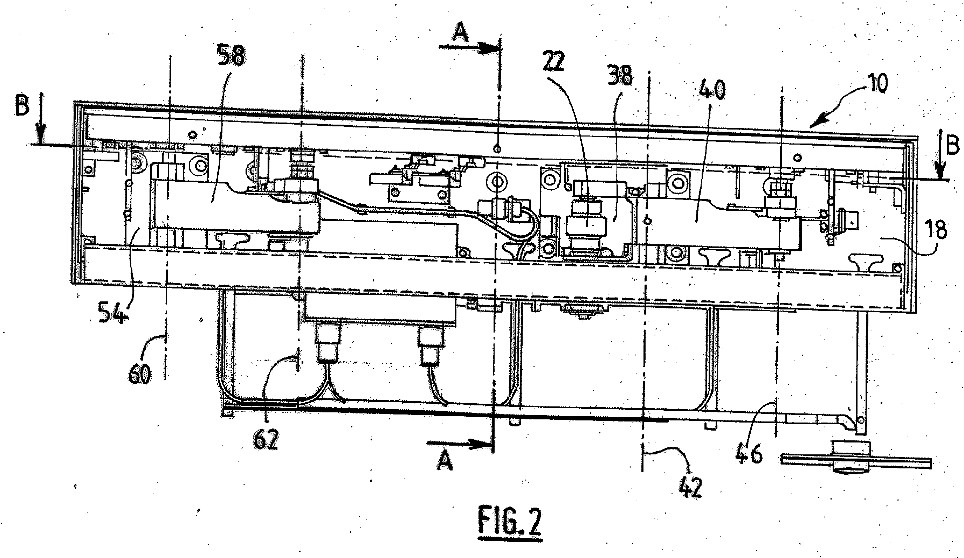

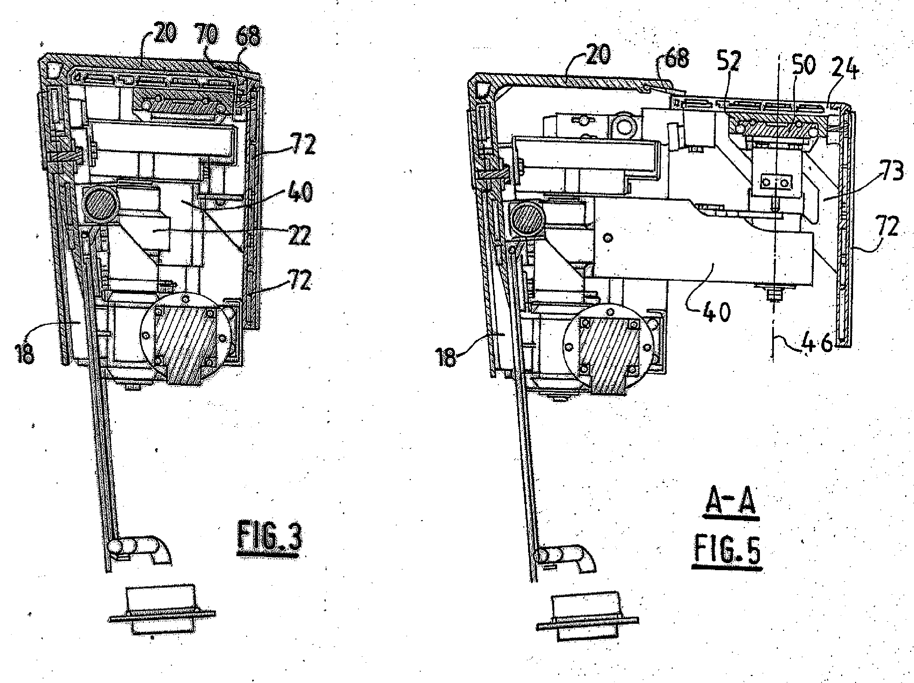

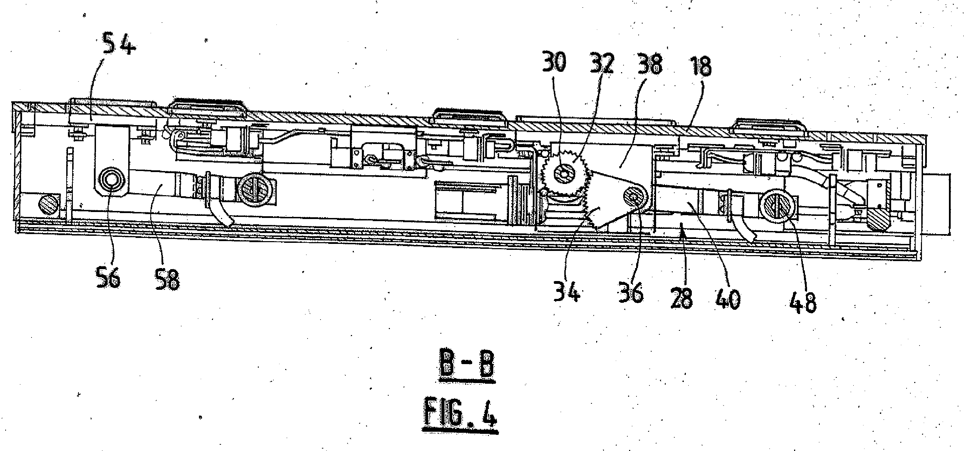

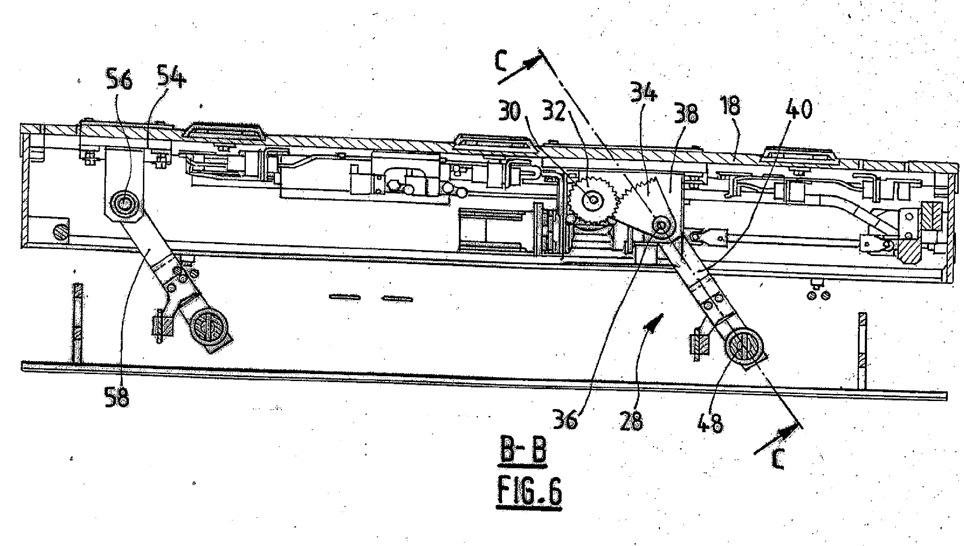

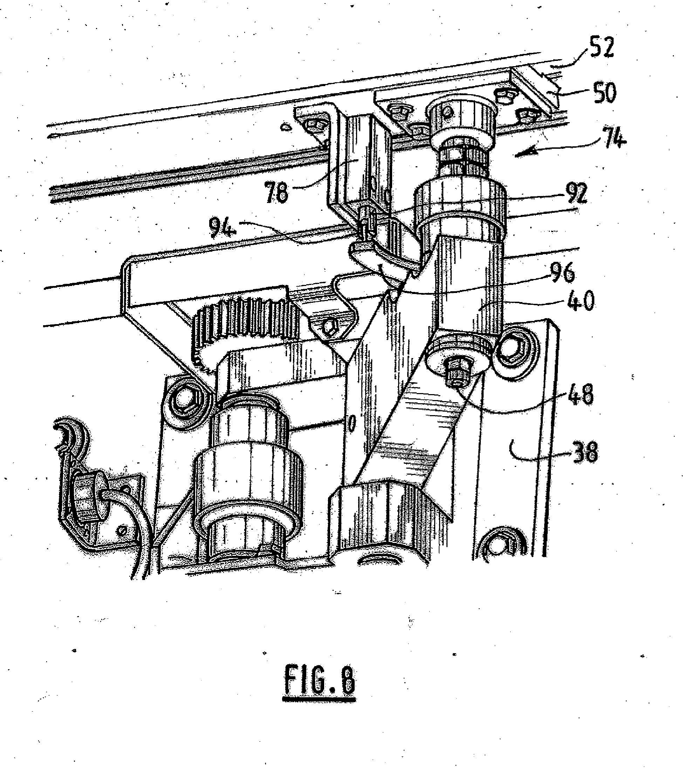

La structure du comble-lacune 10 est visible sur les figures 2 à 9. Il comporte un châssis 18 destiné à être fixé à la caisse du véhicule et définissant une direction verticale de référence. Ce châssis 18 est couvert en partie supérieure par un plancher 20 constituant un seuil de porte fixe.

Dans la position des figures 1 à 3, le châssis 18 sert de logement pour un moteur électrique 22, une marche mobile 24, un mécanisme de guidage 26 de la marche mobile et un mécanisme de transmission 28 entre le moteur 22 et la marche mobile 24.

Le moteur électrique 22 peut être par exemple un moteur pas à pas ou un moteur sans balais, couplé un réducteur primaire entrainant un arbre intermédiaire 30 portant un pignon 32 engrenant avec un secteur denté 34 claveté sur un arbre mené 36. Le motoréducteur 22 est fixé à une première platine 38 logeant également les paliers pour l'arbre intermédiaire 30 et l'arbre mené 36, cette platine étant fixée au châssis 18. L'arbre intermédiaire 30 et l'arbre mené 36 sont coaxiaux, et préférentiellement parallèle à l'arbre moteur (non représenté).

Une première bielle de transmission 40 est clavetée sur l'arbre mené 36 de manière à tourner autour d'un premier axe géométrique de rotation 42 fixe par rapport au châssis 18. L'extrémité distale de la bielle 40 est pourvue d'un palier lisse 44 qui définit un deuxième axe géométrique de rotation 46 pour une extrémité d'une tige 48 dont l'autre extrémité est fixé à un coulisseau 50 guidé en translation dans une coulisse 52 fixée à la marche mobile 24.

Une deuxième platine 54 est fixée au châssis 18 à distance de la première platine 38. Cette deuxième platine 54 est équipée de paliers de guidage d'un arbre 56 fixé à l'extrémité proximale d'une deuxième bielle 58, de sorte que la deuxième bielle 58 tourne autour d'un troisième axe géométrique de rotation 60 fixe par rapport au châssis 18 et parallèle au premier axe géométrique 42. L'extrémité distale de la deuxième bielle 58 est équipée d'un palier lisse similaire à celui de la première bielle, qui définit un quatrième axe géométrique de rotation 62 pour une extrémité d'une tige dont l'autre extrémité est fixé à l'extrémité du coulisseau 50 opposée à la première bielle 40. Le coulisseau 50 est dimensionné de sorte que le deuxième axe 46 et le quatrième axe 62 soient à la même distance l'un de l'autre que les premier et troisième axes 42, 60. Les troisième et quatrième axes 60, 62 sont parallèles l'un à l'autre et aux premier et deuxième axes 42, 46. Les deux bielles 40, 58 sont identiques, de sorte que les distances entre les premier et deuxième axes 42, 46 d'une part, et les troisième et quatrième axes 60, 62 d'autre part, sont identiques. Enfin, la coulisse 52 et le coulisseau 50 permet un mouvement dans une direction perpendiculaire aux quatre axes de rotation 42, 46, 60, 62 et passant par les deuxième et quatrième axes, direction qui sera dite longitudinale, car parallèle à l'axe longitudinal de la caisse du véhicule équipé du comble-lacune 10.

On comprend que les quatre axes de rotation 42, 46, 60, 62 définissent les coins d'un parallélogramme déformable défini par le châssis 18, les deux bielles 40, 58 et le coulisseau 50. En pratique, les quatre axes 42, 46, 60, 62 sont verticaux, ou proche de la verticale, c'est-à-dire penchés à moins de 30° et de préférence à moins de 15° de la verticale.

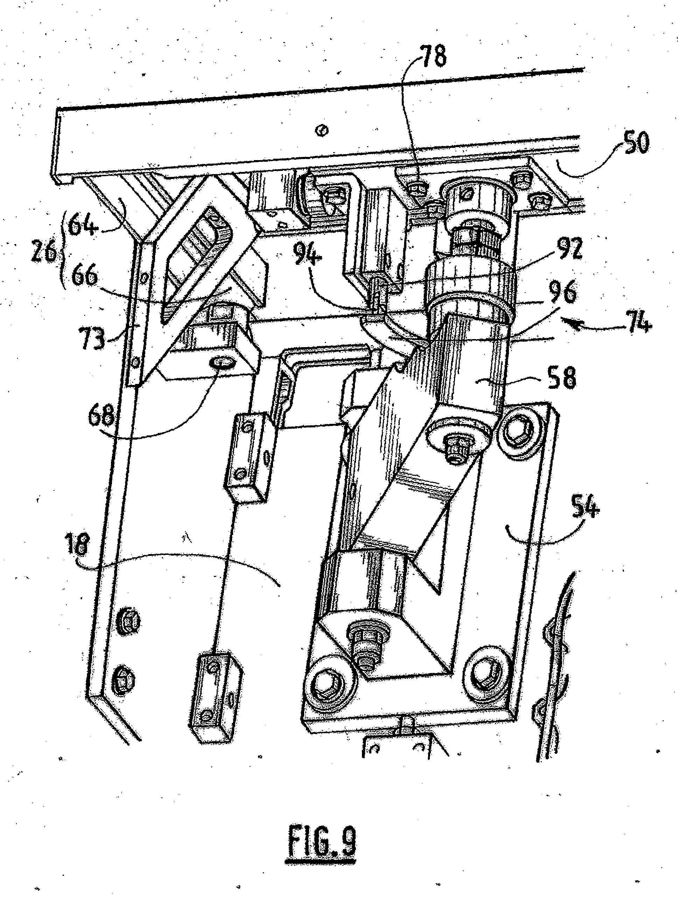

Le mécanisme de guidage 26 de la marche mobile 24, visible sur la figure 9, est constitué par un rail double 64 à profil en U solidaire de la marche mobile 24, à l'intérieur duquel roule un galet 66 tournant autour d'un axe 68 fixé au châssis 18. Le rail 64 est orienté dans une direction perpendiculaire à la coulisse 52 et aux axes de rotation 42, 46, 60, 62. Cette direction sera dite transversale car elle correspond à la direction transversale du véhicule, qui correspond également aux mouvements d'entrée et de sortie des passagers. Lorsqu'un effort dans un sens longitudinal est appliqué à la marche mobile 24, l'un des côtés intérieurs du rail 64 vient en appui contre le galet 66 qui constitue une butée empêchant tout déplacement longitudinal de la marche mobile 24. Si un effort est appliqué dans l'autre sens longitudinal, c'est l'autre côté intérieur du rail 64 qui vient en appui contre le galet 66 qui empêche là aussi tout mouvement longitudinal.

Préférentiellement, les moyens de guidage de la marche mobile 24, à savoir le rail 64 en U et le galet 66 acceptent l'un par rapport à l'autre un débattement vertical. Ainsi les deux bielles supportent-elles la totalité des charges verticales transmises par la marche mobile 24. Les moyens de guidage assurent donc un guidage du mouvement de la marche mobile 24 suivant un axe transversal, et plus généralement parallèlement à un plan vertical transversal.

Le rebord du plancher fixe 20 est équipé d'une brosse 66 dont la base est logée dans une rainure 70 de la face inférieure du plancher fixe 20, et dont les poils font saillie en biais, à un angle de 15° à 30° par rapport à l'horizontale vers la marche mobile 24 en position déployée, de manière à toujours avoir une interférence avec cette dernière et à combler l'interstice entre le plancher fixe 20 et la marche mobile 24.

La marche mobile 24 est équipée d'un nez de marche 72 constitué par une plaque fixée perpendiculairement à la marche mobile par des équerres 73 , ce nez de marche 72 faisant office en position rétractée avec la marche fixe 20 de capot de protection pour le système.

Le système fonctionne de la manière suivante. Partant de la position rétractée des figures 1 à 3, le moteur 22 est activé pour entrainer en rotation l'arbre mené 36, par l'intermédiaire de l'étage de réduction et de l'arbre intermédiaire 30. La première bielle 40 et l'arbre mené 36 étant solidaires en rotation pour former une manivelle, l'extrémité proximale de la première bielle 40 pivote autour du premier axe géométrique de rotation 42, de sorte que le deuxième axe géométrique de rotation 46 à l'extrémité distale de la première bielle 40 décrit, par rapport au châssis 18, un arc de cercle. La marche mobile 24, quant à elle, est libre de se déplacer dans la direction transversale, mais son mouvement en direction longitudinale est rendu impossible par le galet 66 qui est en butée contre l'un des côtés du rail 64 en U. La coulisse 52 étant solidaire de la marche mobile 24, le mouvement en arc de cercle du deuxième axe de rotation 46 se trouve ainsi décomposé en un mouvement de translation transversale de la marche mobile 24 et de la coulisse 52 par rapport au châssis 18, et un mouvement de translation longitudinale du coulisseau 50 dans la coulisse 52. Le mouvement du coulisseau 50 entraine le quatrième axe 62 et l'extrémité distale de la deuxième bielle 58, qui suit en le reproduisant le mouvement de la première bielle 40. Il résulte de ces mouvements une ouverture progressive du parallélogramme déformable et un déplacement progressif de la marche mobile 24 en translation dans la direction transversale définie par les moyens de guidage 26.

Ce mouvement peut être poursuivi jusqu'à ce que le mécanisme atteigne des butées de fin de course, ou être arrêté à tout moment dans une position intermédiaire. Pour rétracter le système, il suffit d'entrainer le moteur 22 en sens inverse. Durant le mouvement de rétractation, la brosse 68 racle la marche mobile 24 et évite l'introduction de gravillons entre la marche mobile 24 et le plancher fixe 20.

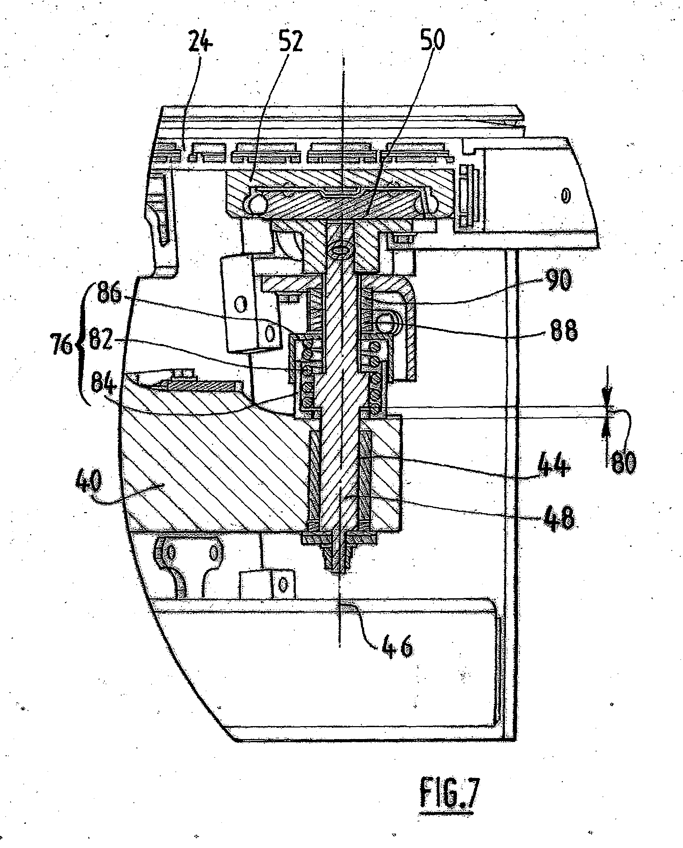

De manière optionnelle, l'interface entre chacune des bielles 40, 58 et la tige 48 correspondante de liaison au coulisseau 50 est équipée d'un détecteur de présence, visible en détail sur les figures 7 à 9. Les deux détecteurs étant identiques, seul celui de la première bielle 40 sera décrit. Le détecteur de présence 74 est constitué d'un transducteur 76 transformant un effort exercé sur la marche mobile 24 parallèlement aux deuxième et quatrième axe en un déplacement proportionnel, et d'une cellule de détection de déplacement 78, qui renvoie un signal électrique en fonction du déplacement de la marche mobile 24 parallèlement au deuxième axe 46. Plus spécifiquement, la tige 48 est montée dans le palier lisse 44 de manière à coulisser axialement dans le palier, sur une course 80 maximale de 5 mm environ, limitée par des butées axiales. Un ressort de compression 82 est bandé entre deux coupelles, l'une 84 inférieure solidaire de la bielle 40, l'autre 86 supérieure en appui contre un écrou 88 vissé à une partie filetée de la tige 48 et sécurisé par un contre-écrou 90. Lorsque une charge est appliquée sur la marche mobile 24 en position déployée, par exemple du fait d'un passager y prenant appui, la composante de cette charge parallèle à la tige 48 et au deuxième axe géométrique 42, (en pratique la composante verticale) est transmise à la tige 48 puis au ressort 82 par l'intermédiaire de la coupelle supérieure 86. Il s'ensuit un déplacement axial de la tige 48 par rapport à la bielle 40, proportionnel à la compression du ressort 82 et donc à l'effort.

Ce déplacement est détecté par la cellule de détection de déplacement 78 fixée à la marche mobile 24 et constituée de façon connue d'un plongeur 92 à aimant permanent dont le déplacement axial induit une variation de champ mesurée dans une bobine (non représentée). Le plongeur 92 est équipé d'un galet 94 pour rouler sur une piste plane en arc de cercle 96 solidaire de la bielle 40, de façon à délivrer un signal quelle que soit la position angulaire de la bielle 40.

Les signaux électriques émis par les deux capteurs de déplacements sont traités par une unité de traitement pour émettre un signal de verrouillage du moteur 22 lorsque la charge détectée dépasse un seuil donné, par exemple 150 Newtons. Le détecteur de présence peut également être constitué d'un interrupteur activé par le mouvement du plongeur 92. Le cas échéant, la cellule de détection de déplacement 78 peut être omise pour l'une des deux bielles 40, 58.

Lorsque le comble-lacune 10 est ainsi équipé de capteurs de charge répondant à un affaissement de la marche mobile 24, un soin particulier doit être apporté à la brosse dont les poils doivent avoir une longueur suffisante pour avoir une interférence significative avec la marche mobile 24 dans sa position la plus chargée, lorsque les tiges sont en butée de fin de course. L'objectif est ici d'éviter que des gravillons ou autres éléments polluants s'introduisent dans l'interstice ouvert entre la marche mobile 24 et le plancher.

Naturellement, l'invention n'est pas limitée à l'exemple illustré par les dessins, et de nombreuses variantes sont possibles.

Les moyens moteurs peuvent être de tout type, par exemple hydrauliques ou pneumatiques. S'ils mettent en oeuvre un vérin, ils peuvent être en accouplés à la première bielle à une position intermédiaire entre le premier et le deuxième axes de rotation.

Il est théoriquement envisageable d'inverser une partie du mécanisme, en prévoyant un mécanisme à coulisse 52 et coulisseau 50 liant les premiers et troisième axes géométriques de rotation, et en fixant les deuxième et quatrième axes dans le repaire géométrique lié à la marche mobile 24.

Dans cet esprit, on peut envisager un moteur fixé à la marche mobile 24.

Dans la mesure où les bielles supportent la charge, il ne sera pas possible de se passer de la deuxième bielle 58. On pourrait toutefois envisager, si l'encombrement le permet, que les moyens de guidage transversal soient modifiés de manière à supporter la charge, auquel cas une seule bielle peut être suffisante pour assurer l'entrainement du mécanisme.

Les axes géométriques de rotation sont préférentiellement verticaux, de sorte que le déplacement de la marche mobile est essentiellement horizontal. Toutefois, il est également envisageable de prévoir un déploiement selon une direction transversale en faible inclinaison par rapport à l'horizontale. Dans un tel cas, les axes de rotation seront inclinés d'un angle donné par rapport à la verticale, par exemple 2° à 5°, de préférence moins de 15°.

## Revendications

1. Système de comble-lacune (10) rétractable comportant :
- un châssis (18) définissant une direction verticale,
- au moins une marche mobile (24) mobile par rapport au châssis (18) entre une position rétractée et une position déployée,
- des moyens moteurs (22) liés à la marche mobile (24) par une chaîne cinématique de transmission pour déployer la marche mobile (24) de la position rétractée à la position déployée, et
- des moyens de guidage de la marche mobile (24) par rapport au châssis (18), imposant à la marche mobile (24) une trajectoire parallèle à un plan vertical de guidage,
**caractérisé en ce que** la chaîne cinématique de transmission comprend :
- au moins une première bielle liée au châssis (18) de manière à être mobile par rapport au châssis (18), lorsque la marche mobile (24) se déploie de la position rétractée à la position déployée, autour d'un premier axe géométrique instantané de rotation (42) non perpendiculaire à l'axe vertical, et liée à la marche mobile (24) de manière à être mobile par rapport à la marche mobile (24), lorsque la marche mobile (24) se déploie de la position rétractée à la position déployée, autour d'un deuxième axe géométrique instantané de rotation (46).

2. Système selon la revendication 1, **caractérisé en ce que** le premier axe géométrique de rotation (42) est vertical.

3. Système selon la revendication 1 ou la revendication 2, **caractérisé en ce que** le deuxième axe géométrique de rotation (46) est parallèle au premier axe de géométrique de rotation (42).

4. Système selon l'une quelconque des revendications précédentes, **caractérisé en ce que** les premier et deuxième axes géométriques de rotation (42, 46) sont parallèles au plan de guidage.

5. Système selon l'une quelconque des revendications précédentes, **caractérisé en ce que** les moyens de guidage (26) de la marche mobile (24) par rapport au châssis (18) imposent à la marche mobile (24) un mouvement de translation par rapport au châssis (18).

6. Système selon la revendication précédente, **caractérisé en ce que** le mouvement de translation de la marche mobile (24) par rapport au châssis (18) suit une direction perpendiculaire à l'axe vertical.

7. Système selon l'une quelconque des revendications précédentes, **caractérisé en ce que** les moyens de guidage (26) de la marche mobile (24) par rapport au châssis (18) comportent au moins une glissière rectiligne (64).

8. Système selon l'une quelconque des revendications précédentes, **caractérisé en ce que** le premier axe géométrique instantané de rotation est fixe par rapport au châssis (18).

9. Système selon la revendication précédente, **caractérisé en ce que** la première bielle est liée à la marche mobile (24) de manière à que le deuxième axe géométrique de rotation se déplace par rapport à la marche mobile (24), lorsque la marche mobile (24) se déploie de la position rétractée à la position déployée, suivant une trajectoire dans un plan perpendiculaire à l'axe géométrique vertical.

10. Système selon l'une quelconque des revendications précédentes, **caractérisé en ce que** la marche mobile (24) comporte une coulisse (52) de guidage du deuxième axe géométrique de rotation (46) suivant une trajectoire rectiligne perpendiculaire au plan vertical de guidage.

11. Système selon l'une quelconque des revendications précédentes, **caractérisé en ce que** une chaîne cinématique de transmission relie les moyens moteurs (22) à la marche mobile (24) pour rétracter la marche mobile (24) de la position déployée à la position rétractée.

12. Système selon l'une quelconque des revendications précédentes, **caractérisé en ce que** les moyens moteurs comprennent un moteur électrique (22) pourvu d'un arbre moteur, la chaine cinématique de transmission comportant un étage de réduction reliant l'arbre moteur à un arbre mené (36) coaxial avec le premier axe géométrique de rotation et solidaire en rotation de la première bielle.

13. Système selon l'une quelconque des revendications précédentes, **caractérisé en ce qu'**il comporte en outre une deuxième bielle (58) liée au châssis (18) de manière à être mobile par rapport au châssis (18), lorsque la marche mobile (24) se déploie de la position rétractée à la position déployée, autour d'un troisième axe géométrique instantané de rotation (60) non perpendiculaire à l'axe vertical, et liée à la marche mobile (24) de manière à être mobile par rapport à la marche mobile (24), lorsque la marche mobile (24) se déploie de la position rétractée à la position déployée, autour d'un quatrième axe géométrique instantané de rotation (66), les premier, deuxième, troisième et quatrième axes géométriques instantanés de rotation étant parallèles entre eux et formant un parallélogramme déformable.

14. Système selon la revendication précédente, **caractérisé en ce que** les premier et troisième axes sont situés dans un plan perpendiculaire au plan vertical de guidage.

15. Système selon l'une quelconque des revendications précédentes, **caractérisé en ce que** la première et la deuxième bielles supportent les charges verticales exercées sur la marche mobile (24).

16. Système selon l'une quelconque des revendications précédentes, **caractérisé en ce qu'**il comporte en outre des moyens de détection de présence sur la marche mobile (24), comportant au moins un capteur (74) changeant d'état lorsque la marche mobile (24) supporte une charge supérieure à un seuil prédéterminé.

17. Système selon l'une quelconque des revendications précédentes, **caractérisé en ce que** les moyens de détection incluent un transducteur (76) constituant une interface entre la marche mobile (24) et la bielle.

18. Système selon l'une quelconque des revendications précédentes, **caractérisé en ce que** le châssis (18) comporte un plancher fixe (20).

19. Système selon la revendication précédente, **caractérisé en ce que** le châssis (18) est équipé d'une brosse (68) pourvue de poils qui en position déployée de la marche mobile (24), sont en appui contre celle-ci.

20. Système de comble-lacune (10) rétractable comportant :
- un châssis (18) définissant une direction verticale,
- au moins une marche mobile (24) mobile par rapport au châssis (18) entre une position rétractée et une position déployée,
- des moyens moteurs (22) pour déployer la marche mobile (24) de la position rétractée à la position déployée,
- un mécanisme de guidage de la marche mobile (24) par rapport au châssis (18), imposant à la marche mobile (24) une trajectoire parallèle à un plan vertical de guidage, et
- un mécanisme de transmission reliant les moyens moteurs (22) à la
marche mobile (24) et de support de la marche mobile (24),
**caractérisé en ce que** le mécanisme de transmission et de support de la marche mobile comprend :
- une coulisse (52) solidaire de la marche mobile, guidant un coulisseau (50) en translation parallèlement à un axe longitudinal perpendiculaire au plan vertical de guidage,
- une première bielle liée au châssis (18) de manière à être mobile par rapport au châssis (18), lorsque la marche mobile (24) se déploie de la position rétractée à la position déployée, autour d'un premier axe géométrique de rotation (42), et liée au coulisseau (50) de manière à être mobile par rapport à la coulisseau (50), lorsque la marche mobile (24) se déploie de la position rétractée à la position déployée, autour d'un deuxième axe géométrique de rotation (46),
- une deuxième bielle (58) liée au châssis (18) de manière à être mobile par rapport au châssis (18), lorsque la marche mobile (24) se déploie de la position rétractée à la position déployée, autour d'un troisième axe géométrique de rotation (60), et liée au coulisseau (50) de manière à être mobile par rapport au coulisseau (50), lorsque la marche mobile (24) se déploie de la position rétractée à la position déployée, autour d'un quatrième axe géométrique de rotation (66), les premier, deuxième, troisième et quatrième axes géométriques de rotation étant parallèles entre eux et parallèle à la direction verticale ou inclinés à moins de 15° par rapport à la direction verticale, et formant un parallélogramme déformable.

21. Système selon la revendication précédente, **caractérisé en ce que** le coulisseau (50) est lié aux première et deuxième bielles (40, 58) par une interface élastique (76) telle que la marche mobile admet une course élastique limitée par rapport aux première et deuxième bielles (40, 58) parallèlement au premier axe géométrique de rotation.
